(19) Europäisches Patentamt
European Patent Office
Office européen des brevets

(11) Publication number: **0 203 581 B1**

(12) **EUROPEAN PATENT SPECIFICATION**

(45) Date of publication of patent specification: **14.08.91**

(51) Int. Cl.⁵: **C01B 31/04**

(21) Application number: **86107227.0**

(22) Date of filing: **28.05.86**

The file contains technical information submitted after the application was filed and not included in this specification

# (54) Process for producing graphite.

(30) Priority: **30.05.85 JP 115415/85**
**30.05.85 JP 115416/85**

(43) Date of publication of application:
**03.12.86 Bulletin 86/49**

(45) Publication of the grant of the patent:
**14.08.91 Bulletin 91/33**

(84) Designated Contracting States:
**DE FR GB**

(56) References cited:
**US-A- 3 635 675**

**CHEMICAL ABSTRACTS, vol. 77, no. 26, 25th December 1972, page 60, no. 165891u, Columbus, Ohio, US; H.M. EZEKIEL: "Direct graphitization of polymer yarns" & AMER.CHEM.SOC., DIV. ORG. COATINGS PLAST. CHEM., PAP. 1971, 31(1). 415-25**

**CHEMICAL ABSTRACTS, vol. 83, no. 18, 3rd November, 1975, page 93, no. 148949a, Columbus, Ohio, US; & JP-A-75 58 320 (KUREHA CHEMICAL INDUSTRY CO., LTD.) 21-05-1975**

(73) Proprietor: **Research Development Corporation of Japan**
**5-2, Nagatacho 2-chome**
**Chiyoda-ku Tokyo(JP)**

Proprietor: **MATSUSHITA ELECTRIC INDUSTRIAL CO., LTD.**
**1006, Oaza Kadoma**
**Kadoma-shi, Osaka-fu, 571(JP)**

(72) Inventor: **Murakami, Mutsuaki**
**2297 (13-21), Miwa-cho Machida**
**Tokyo 194-01(JP)**

(74) Representative: **von Kreisler, Alek, Dipl.-Chem. et al**
**Deichmannhaus am Hauptbahnhof**
**W-5000 Köln 1(DE)**

**EP 0 203 581 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

CHEMICAL ABSTRACTS, vol. 95, no. 6, 10th August 1981, page 67, no. 44595p, Columbus, Ohio, US; I.P. DOBROVOL'SKAYA: "Changes of supramolecular structure of poly(p-phenylene-1,3,4-oxadiazole) fibers during pyrolysis" & VYSOKOMOL. SOEDIN., SER. A 1981, 23(6), 1261-7

PATENTS ABSTRACTS OF JAPAN, vol. 8, no. 222 (C-246)[1659], 9th October 1984; & JP-A-59 105 029 (SHINGIJIYUTSU KAIHATSU JIGIYOUDAN) 18-06-1984

## Description

BACKGROUND OF THE INVENTION

(1) Technical Field

The present invention relates to a process for producing graphite utilized in electrodes, heating elements, structures, gaskets for high-temperature and high-pressure instruments, heat-insulating materials, corrosion resistant sealing materials, brushes for electric use, X-ray monochromators and the like, particularly to a process for producing graphite by heat treating a specific polymeric material as a starting material at a particular temperature.

(2) Background Information

Graphite holds an important position as industrial materials because of its outstanding heat resistance, chemical resistance, high electric conductivity and the like, and has been widely used as electrodes, heating elements and structures. Natural graphite may be used for such purposes. However, natural graphite occurs in an extremely limited amount and is intractable because of its powder or block form. Therefore, graphite has been artificially produced.

Processes for producing such artificial graphite can be mainly classified into the following four processes.

In a first process, graphite is produced by separating from the melts of Fe, Ni/C system, decomposition of silicon carbide, aluminium carbide and so on, or cooling of the carbon melts under elevated temperature and high pressure. The graphite obtained in such a manner is called Kish graphite, and has the same properties as natural graphite. According to this process, however, only a minute flake-like graphite is obtained. Further, together with the complexity of the manufacturing process and the expensive cost, this process has not been used in the industrial production.

A second process is one in which various organic or carbonaceous materials are graphitized by heating at a temperature of at least 3000 °C. In this process, graphite having the same physical properties as those of natural graphite or Kish graphite cannot be obtained. For example, natural graphite and Kish graphite have an electric conductivity in the direction of a-axis, which is the most typical property of graphite, of from $1 \times 10^4$ S/cm to $2.5 \times 10^4$ S/cm. In contrast to this, only the product having an electric conductivity of from $1 \times 10^3$ S/cm to $2 \times 10^3$ S/cm can generally be obtained by this process. This fact shows that graphitization does not well proceed in this process. However, the products obtained by this second process have been employed widely in such uses that perfect graphite is not necessarily required, because of the simplicity of the manufacturing process.

Therefore, if graphite having the properties similar to those of natural graphite can be obtained by this process, it can be said that the industrial meaning thereof is significantly important.

In a third process, graphite is produced by hightemperature decomposition, sedimentation and hot working of gaseous hydrocarbons, wherein annealing is effected at a temperature of 3400 °C under a pressure of 10kg/cm$^2$ for a long period of time. Graphite thus obtained is called highly orientated pyrographite and has almost the same properties as natural graphite. For example, it has an electric conductivity in the direction of a-axis of $2.5 \times 10^4$ S/cm. According to this process, graphite of considerably large sizes can be prepared, unlike Kish graphite. This process has, however, disadvantages that the manufacturing process is complicated and expensive.

By a fourth process, natural graphite is immersed in a mixed solution of concentrated nitric acid and concentrated sulfuric acid, and thereafter a spacing between graphite layers is expanded by heating. Graphite thus obtained is called expanded graphite, and is powdery. Accordingly, it is further necessary to apply a high-pressure press in the presence of an adhesive, to make it sheet-like. Sheet-like graphite thus obtained is inferior to natural monocrystal graphite in its properties. For example, the electric conductivity of sheet-like graphite is ordinary about $1.2 \times 10^3$ S/cm. Further, a large amount of acids is required in this process. As a result, there are caused many problems such as generation of $SO_x$ and $NO_x$ gases, corrosion of metals due to exudation of residual acids.

As described hereinabove, the second and the fourth processes of the conventional processes I through 4 cannot provide graphite having properties similar to those of natural monocrystalline graphite. On the other hand, the first and the third processes can provide graphite having properties similar to those of natural monocrystal graphite, but have the disadvantages that the processes are complicated and the products are highly expensive. The fourth process also contains many problems in the process.

Then, the problems of the second process which can be most easily conducted will hereinafter be further described in detail. In this process, there are usually used as starting materials a carbonaceous material such as coke or the like and a binder such as coal tar or the like. However, perfect graphite cannot be obtained from these starting materials as already described, even if they are heat treated at a temperature of about 3000 °C. For example, the electric conductivity of the product is usually in the range of 100S/cm to 1000S/cm, which is below one-tenth of that of perfect graphite.

With respect to carbon structures produced by heating coke or charcoal at a temperature of about 3000 °C, various kinds of structures exist which range from structures being close to the graphite structure to structures being far away from the graphite structures. Carbon which can be relatively easily converted into graphitic structure by mere heat treatment in this way is called graphitizable carbon, and the other carbon is called non-graphitizable carbon. The cause for such a difference in the structure is closely related to the mechanism of graphitization, and depends on whether the structural defects present in the carbon precursor are easily removed by the subsequent heat treatment or not. Therefore, the fine structure of the carbon precursor plays an important role to the graphitizing property.

With regard to these processes using coke or the like as the starting material, some studies have been carried out to produce graphitic films by heat treating polymeric materials. It has been considered that these studies intend to control the fine structure of the carbon precursor while efficiently using the molecular structure of the polymeric material. In this process, the polymeric material is heat treated in vacuo or in an inert gas, and through decomposition and polycondensation reaction, the carbonaceous material is formed. In this case, however, graphitic films are not necessarily obtained from all of the polymeric materials used as the starting materials. Most of the polymeric materials can not be used for this purpose. The reason therefore will be explained as follows.

The reaction pathways followed by the polymeric compounds on heating are generally classified into three types, namely (1) gasification by random decomposition or depolymerization, (2) carbonization via pitch-like melts, and (3) carbonization while maintaining their solid state.

In the case of the reaction pathway (1), evaporation and gasification cause very little carbonaceous material. Therefore, it is apparent that this type of polymer may not be used for graphitization.

Many of the materials which follow the reaction pathway (2) belong to a class of graphitizable materials. When they are merely heated in a non-oxidizing gas, however, they are lost to a great extent by evaporation and gasification. For this reason, in general, they are preliminarily heated in the presence of oxygen, to cross link the polymer chains to each other with oxygen, and thereafter carbonized or graphitized. At the same time, however, this causes the polymeric materials originally belonging to a class of graphitizable materials to be converted to non-graphitizable materials. Accordingly, the films having a structure near to the perfect graphite can not be obtained from the polymers preliminarily treated with oxygen, even if they are heat treated at a temperature of at least 3000 °C.

The reaction pathway (3), namely carbonization while maintaining the solid state, is most favorable from the viewpoint of the formation of the carbonaceous materials. However, most of the polymers which decompose according to the pathway (3) are known to belong to a class of non-graphitizable materials which cannot be converted to graphite films, even if they are heat treated at a temperature of at least 3000 °C. This means that for the polymeric materials which can form graphitic films, it is necessary to satisfy consistently two requirements that they form the carbonaceous material by the heat treatment and that they belong to a class of graphitizable materials. The following polymers were attempted to be heat treated for such a purpose; phenol-formaldehyde resins, polyacrylonitrile, cellulose, polyamides, polyimides, polybutadiene, polyparaphenylenes, polyparaphenylene oxides, polyvinyl chloride and the like. Since all of them belong to a class of non-graphitizable materials, any product having a high degree of graphitization has not yet been obtained. The sole problem of the process for heat treating these polymers is how to find out such a polymeric material that easily forms the graphite film.

US-A-3,635,675 discloses a method for the production of graphite fibers with high tensile strength, high modulus of elasticity and fibers of improved graphitic character. The method comprises rapidly bringing stabilized synthetic polymer yarn to a temperature within the range of 1800 °C to 3200 °C and optionally heating the yarn at a selected temperature in the range of about 200 °C to 500 °C in an oxidizing atmosphere in order to effect stabilization. Preferred polymers are polymers of nitrogen containing polycyclic organic compounds, e.g. poly(1,3/1,4-phenylene-2,5-(1,3,4-oxidiazole)].

SUMMARY OF THE INVENTION

The present invention has been completed for resolving several problems in the preparation of artificial graphite described above. It is a primary object of the present invention to provide graphite of good quality

having the properties similar to those of natural graphite by an easy process that a polymer having a particular structure is heat treated in an inert gas or in vacuo. The present invention basically relates to the preparation process belonging to the second of the abovementioned four processes for the production of artificial graphite.

In the specification previously filed (Japanese Patent Application No. 214629/1982), the present inventor described that poly-p-phenylene-1, 3, 4-oxadiazole (hereinafter abbreviated to POD) was converted to a nitrogen-containing condensed-polycyclic structure having high electric conductivity by the heat treatment at a temperature in the range of from 520° to 1400°C, in vacuo or in an inert gas. Noting such a specific structure of heat-treated POD, the present inventor has further repeatedly studied the heat treatment thereof. As a result, it has been found that POD can be more easily graphitized than any other conventional polymeric material by the heat treatment at a temperature of at least 1600°C, preferably at least 1800°C. In addition, graphitization of many other polymers has been attempted. It has consequently been found that three types of polybenzothiazoles, a polybenzobisthiazole, a polybenzoxazole, a polybenzobisoxazole and a polythiazole can more easily be graphitized by the heat treatment at particular temperatures than any other conventional polymeric materials, thus arriving at the present invention.

The present invention refers to a process for producing graphite, which comprises heat treating a film-shaped polymer selected from the group consisting of a poly-1,4-phenyleneoxadiazole, polybenzothiazoles, a polybenzobisthiazole, a polybenzoxazole, a polybenzobisoxazole and polythiazole in an inert gas atmosphere or in vacuo, at a temperature of at least 2000°C, and thereby converting the polymer to graphite.

DESCRIPTION OF THE PREFERRED EMBODIMENTS

POD, which is one of the starting materials of the present invention, is a known and heat-resistant polymer and generally obtained by cyclodehydration of the polyhydrazide prepared by polycondensation reaction of terephthalic acid and hydrazine. POD can also be obtained by the reaction of dimethyl terephthalate and sulfuric acid hydrazide, the reaction of terephthalic acid chloride and hydrazine, or the like. POD is soluble in concentrated sulfuric acid and a film obtained from a solution of concentrated sulfuric acid by casting has high crystallinity. This is considered to be due to the ordered orientation of high-polar 1, 3, 4-oxadiazole rings induced by the mutual interaction of dipoles. It obviously depends on such orientation of POD that the nitrogen-containing condensed-polycyclic structure is easily produced from POD by the heat treatment at a temperature of from 520° to 1400°C. The presence of such a nitrogen-containing condensed-polycyclic structure is presumed to make the graphitization easy. The various isomers of POD also have, therefore, the similar graphitizing property, if they have high crystallinity.

As the isomers of POD, there are mentioned poly (m-phenylene-1, 3, 4-oxadiazole), poly (p-phenylene-1, 2, 4-oxadiazole), poly (m-phenylene-1, 2, 4-oxadiazole), poly (o-phenylene-1, 3, 4-oxadiazole), poly(o-phenylene-1, 2, 4-oxadiazole), the copolymers thereof and the like. Also, the copolymers of POD and phenylenevinylenes have the graphitizing property.

According to the present invention, POD is heated at a temperature of at least 2000°C, The higher the temperature of the heat treatment is, the higher degree of graphitization is obtained in a short period of time. The graphitization can be enhanced by carrying out this heat treatment under elevated pressure and in the presence of a catalyst. The structural formulas and abbreviations of polymers described above, which are the other starting materials of the present invention, are as shown in Table 1.

Table 1

| Name of polymer | Abbreviation | Structural formula |
|---|---|---|
| Polybenzothiazole | PBT-1 | 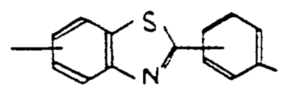 |
| Polybenzobis-thiazole | PBBT | 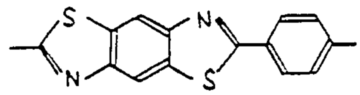 |
| Polybenzoxazole | PBO | 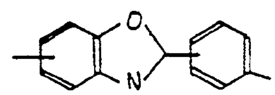 |
| Polybenzobis-oxazole | PBBO | 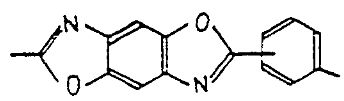 |
| Polybenzothiazole | PBT-2 | 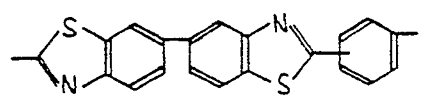 |
| Polybenzothiazole | PBT-3 | 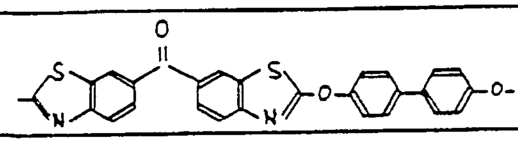 |
| Polythiazole | PT | 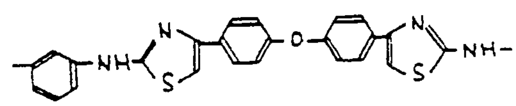 |

In the present invention, the above PBT-1, PBT-2, PBT-3, PBBT, PBO, PBBO and PT are heated at a temperature of at least 2000° C. The higher the temperature of the heat treatment, the higher degree of graphitization is achieved in a short period of time. Therefore, it is more preferable to heat them at a temperature of at least 2500° C. The graphitization can be enhanced by carrying out this heat treatment under elevated pressure and in the presence of a catalyst.

The pressure applied can be from 2Kb to up to 10Kb or more, for DOP, and from 5Kb to up to 10Kb or more, for the other above-mentioned polymers. As the catalyst, there can be used an element belonging to one of the groups IVb through VIIb and VIII of the periodic table, for example, a finely divided powder of Fe, Co, P, Sn, Ni, Sb or the like. The catalyst is added in an amount of 2% to 20% by weight based on POD or the other polymers described above. If the catalyst is added in an amount of more than 20% by weight, the further increase of the effect is not shown and the additive is also aggregated and separated.

This heat treatment is preferably carried out in an inert gas or in vacuo. The inert gas includes, for example, helium, argon, nitrogen and the like.

By this high-temperature heat treatment, a nitrogen-containing condensed-polycyclic structure of POD releases nitrogen atoms to be converted to a condensed-polycyclic structure consisting of carbon alone. According to the results of elemental analysis, the product treated at a temperature of 1400° C contains 4% of nitrogen. In contrast thereto, the products treated at 1600° C and 2000° C contain about 1% and 0.1% of nitrogen, respectively. In the product treated at a temperature of at least 2500° C, no nitrogen is detected. This means that POD is converted from a nitrogen-containing condensed-polycyclic structure into a condensed-polycyclic structure, namely graphite, forming the boundary at a temperature of about 1400° to about 1600° C.

The characteristics of this heat-treated POD are summarized in the following two points. The first is

characterized in that POD is almost completely converted into graphite at a temperature of at least 2500°C. The second is characterized in that the rapid graphitization is effected at such a low temperature as 2000°C.

With respect to the polymers of the present invention, each of films obtained by casting and fibers obtained by spinning has high crystallinity. These polymers are transformed into a carbonaceous material of a condensed- polycyclic structure containing a hetero-atom by the heat-treatment at a temperature of about 400° to about 1200°C, and the carbonaceous material has the orientation, reflecting the crystallizing property of the starting material. The presence of such a controlled hetero-element-containing condensed-polycyclic structure makes the growth of a graphite structure easy. Actually the elimination reaction of a hetero-atom takes place at a temperature of at least 1400°C, and the hetero-atom-containing condensed-polycyclic structure is transformed into a condensed-polycyclic structure, namely graphite.

This manufacturing process is characterized in that graphite in any shape can be obtained by a simple procedure of heat treatment. While here are disclosed examples in which graphite films are produced by heat treating film-shaped polymers, fibrous graphite can be obtained if a fibrous polymer is used as the starting material, and in fact powdered graphite can be obtained if a powdered polymer is used.

In order to indicate the extent of graphitization, parameters measured by X-ray diffraction such as lattice constant, crystallite size in the direction of C-axis and the like, and degree of graphitization calculated therefrom are usually used. Also, the value of electric conductivity is often utilized. The lattice constant is calculated from the position of the (002) diffraction line of X-ray. It is shown that the closer the constant is to 0.6708 nm (6.708Å) which is the lattice constant of natural monocrystal graphite, the more developed is the graphite structure. The crystallite size in the direction of C-axis calculated from the half width of the (002) diffraction line. It is shown that the larger the value thereof, the more developed is the planar structure of graphite. The crystallite size of natural monocrystal graphite is at least 100nm (1000Å). The degree of graphitization is calculated from the interplanar spacing ($d_{002}$) by the method described in the literature (Merig and Maire, Les Carbons, Vol. 1, page 129 (1965)). In the case of natural monocrystal graphite, of course, it shows 100%. The value of electric conductivity refers to the value in the direction of a-axis of graphite. As to natural monocrystal graphite, it shows $1 \times 10^4$ to $2.5 \times 10^4$ S/cm. The larger value of electric conductivity shows the better approximation to the ideal graphite structure.

According to the present invention, at least one polymer selected from the group consisting of a polyphenyleneoxadiazole, three types of polybenzothiazole, a polybenzobisthiazole, a polybenzoxazole, a polybenzobisoxazole and a polythiazole is heat treated and thereby converted to the graphite structure. This process can provide almost perfect graphite which can not conventionally be obtained, by an extremely simple procedure in which the polymer is merely heat treated in an inert gas or in vacuo, without the conventional preliminary oxidation treatment. Further, according to the process of the present invention, graphite in any shape, namely, film-shaped, fibrous, or powdered graphite, can be easily produced if necessary.

Graphite obtained by the process of the present invention can be widely utilized in electrodes, heating elements, structures, gaskets for high-temperature and high-pressure instruments, heat-insulating materials, corrosion-resistant sealing materials, brushes for electric applications, X-ray monochromators and the like.

The present invention will now be described in detail with reference to the following examples which by no means limit the scope of the invention.

The extent of graphitization is evaluated by the values of lattice constant, degree of graphitization, electric conductivity and the like.

The individual properties of graphite is measured according to the following procedures.

1. Lattice constant ($C_o$)

The X-ray diffraction line of the sample is measured by the Cu Kα -ray using a Phillips Model PW-1051 X-ray diffractometer. The value of $C_o$ is calculated from the (002) diffraction line which appears around 2θ equal to 26° to 27° by using the following Bragg's formula:

$$n\lambda = 2d \sin \theta$$

where 2d is equal to $C_o$, n is equal to 2, and λ is the wavelength of X-ray.

2. Crystallite size ($L_c$)

Crystallite size ($L_c$) is calculated from the half breadth (β) of the diffraction line obtained by correcting

the (002) diffraction line, according to the following relational formula:

$$L = \frac{K\lambda}{\beta \cdot \cos\theta}$$

where K is the shape factor.

3. Degree of graphitization (%)

Degree of graphitization is calculated from the value of interplanar spacing (d) by using the following formula:

$d_{002}$ = 3.354g + 3.44(1-g)

where g shows the extent of graphitizaiton, from the perfect graphite when g is equal to 1 to the amorphous graphite when g is equal to 0.

4. Electric conductivity (S/cm)

The sample is fitted with four-terminal electrodes by using silver paste and gold wires. The value of electric conductivity is determined by applying the electric current to the outer electrodes and measuring the voltage drop at the inner electrodes, and further determining the width, length and thickness of the sample under a microscope.

Example 1

25$\mu$m-thick POD films, each of which was sandwiched by graphite substrates, were heat treated in a flow of argon at desired temperatures ($T_p$) for one hour, after the temperatures were increased at a rate of 10°C/min. The temperature was then lowered at a rate of 20°C/min.

This heat treatment comprised a first heat treatment carried out at a temperature of not higher than 1400°C and a main heat treatment carried out at a temperature above 1600°C. The above first heat treatment was performed by using an infrared heater and the above main heat treatment was conducted in an electric furnace equipped with carbon heaters. The black films obtained at temperatures ($T_p$) of not higher than 1400°C were brittle and had reduced flexibility. At temperatures ($T_p$) of at least 2000°C, however, the films having flexibility were obtained.

In Table 2 data of electric conductivity, lattice constant, crystallite size and degree of graphitization are shown measured for POD films treated at various temperatures.

Table 2

| $T_p$ (°C) | Lattice constant $C_o$ nm (Å) | Crystallite size $L_c$ nm (Å) | Degree of graphitization (%) | Electric conductivity (S/cm) |
|---|---|---|---|---|
| 600 | 0.701 (7.01) | 1 (10) | 0 | $1.5 \times 10^{-5}$ |
| 800 | 0.691 (6.91) | 1.3 (13) | 0 | 68 |
| 1000 | 0.693 (6.93) | 1.5 (15) | 0 | 345 |
| 1200 | 0.690 (6.90) | 2.2 (22) | 0 | 410 |
| 1400 | 0.689 (6.89) | 2.5 (25) | 0 | 510 |
| 1600 | 0.688 (6.88) | 4.0 (40) | 0 | 750 |
| 1800 | 0.686 (6.86) | 7.5 (75) | 11 | 900 |
| 2000 | 0.6828 (6.828) | 28.0 (280) | 30 | 1400 |
| 2200 | 0.6756 (6.756) | 85.0 (850) | 72 | 2300 |
| 2500 | 0.6714 (6.714) | >100 (>1000) | 97 | 7500 |
| 2800 | 0.6708 (6.708) | >100 (>1000) | 100 | 10000 |
| 3000 | 0.6708 (6.708) | >100 (>1000) | 100 | 14000 |

Under these heat-treating conditions, graphitization is initiated at a temperature of at least 1600 °C, and rapidly proceeds at a temperature of 2000° to 2500 °C. At 2500 °C, the degree of graphitization already goes up to 97%, and perfect graphite is obtained at 2800 °C. The values of lattice constant, crystallite size and the like of this perfect graphite are similar to those of single crystal graphite. As described above, it has hitherto been attempted to graphitize various polymeric materials. POD is one of the materials whose graphitization reaction easily proceeds at a temperature as low as about 2500 °C, and therefore it is an extremely excellent raw material for the production of graphite.

The similar results can be obtained also in the other inert gases or in vacuo.

Example 2

In order to compare the excellent graphitizing property of POD with that of the other polymers, four

polymers were heat treated at a temperature of 2500° C, in the same manner as in Example 1. In Table 3 the names of the polymers employed, the structural formulas thereof, and values of lattice constant, degree of graphitization and electric conductivity measured for the heat-treated materials, together with those of POD are summarized.

Table 3

| Name of polymer (Abbreviation) | Structural formula | Lattice constant $C_o$ nm (Å) | Degree of graphitization (%) | Electric conductivity (S/cm) |
|---|---|---|---|---|
| Polyimide (PI) * | 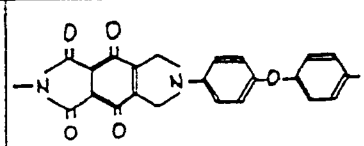 | 0.6797 (6.797) | 48 | 520 |
| Polyamide-imide * (PAI) | 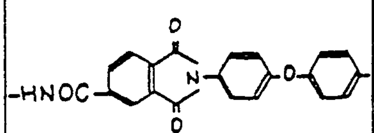 | 0.6854 (6.854) | 15 | 150 |
| Polyamide (1) * (AP-1) | 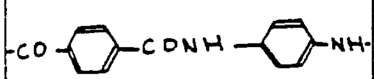 | 0.6838 (6.838) | 24 | 1000 |
| Polyamide (2) * (PA-2) | 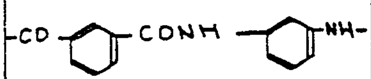 | 0.6787 (6.787) | 54 | 1200 |
| POD | 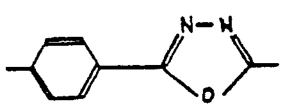 | 0.6714 (6.714) | 97 | 7500 |

* Comparative example

The degree of graphitization (97%) of POD achieved at 2500° C is much higher, compared with that of the other four polymers. Also, the value of electric conductivity measured for the heat-treated material (graphite) of POD is significantly higher, namely from about 7 to 50 times, than that of the heat-treated materials of the other polymers. Therefore, POD has excellent graphitizing property compared with the other polymers.

Example 3

In the heat treatment for graphitizing POD, the actions and effects affected by pressure were examined. The first heat treatment at a temperature of 520° to 1400° C and the main heat treatment at a temperature of above 1600° C were carried out under atmospheric pressure and under elevated pressures of 2Kb, 5Kb and 10Kb. All of the burning conditions, except for pressure, were the same as in Example 1. The results obtained by examining the progress of graphitization of POD are shown in Table 4. It is obvious from these results that increased pressure acts on POD to be graphitized at a lowered heat-treating temperature. For

example, rapid graphitization is initiated at a temperature of at least 2000° C under atmospheric pressure.

However, under increased pressure of 2Kb, graphitization is initiated at a temperature of at least 1800° C, and under pressures of 5Kb and 10Kb, it is initiated at a temperature of at least 1600° C. This means that POD can be easily graphitized by the heat treatment under elevated pressure.

Table 4

| Temperature °C | Pressure (Kb) | Lattice constant $C_o$ nm (Å) | Degree of graphitization (%) | Electric conductivity (S/cm) |
|---|---|---|---|---|
| 1400 | Atmospheric pressure (Ap) | 0.689 (6.89) | 0 | 510 |
| 1600 | Ap | 0.687 (6.87) | 0 | 750 |
| 1800 | Ap | 0.686 (6.86) | 11 | 900 |
| 2000 | Ap | 0.6828 (6.828) | 30 | 1400 |
| 2200 | Ap | 0.6756 (6.756) | 72 | 2300 |
| 2500 | Ap | 0.6714 (6.714) | 97 | 7500 |
| 2800 | Ap | 0.6708 (6.708) | 100 | 10000 |
| 1400 | 2Kb | 0.689 (6.89) | 0 | 540 |
| 1600 | 2Kb | 0.687 (6.87) | 6 | 800 |
| 1800 | 2Kb | 0.683 (6.83) | 29 | 1200 |
| 2000 | 2Kb | 0.676 (6.76) | 70 | 2400 |
| 2200 | 2Kb | 0.6720 (6.720) | 93 | 7000 |
| 2500 | 2Kb | 0.6708 (6.708) | 100 | 10000 |
| 1400 | 5Kb | 0.688 (6.88) | 0 | 600 |
| 1600 | 5Kb | 0.686 (6.86) | 12 | 1300 |
| 1800 | 5Kb | 0.6750 (6.750) | 76 | 2600 |
| 2000 | 5Kb | 0.6717 (6.717) | 95 | 8000 |
| 2200 | 5Kb | 0.6710 (6.710) | 99 | 9600 |
| 1400 | 10Kb | 0.688 (6.88) | 0 | 610 |
| 1600 | 10Kb | 0.684 (6.84) | 23 | 1800 |
| 1800 | 10Kb | 0.674 (6.74) | 81 | 4700 |
| 2000 | 10Kb | 0.6712 (6.712) | 98 | 10000 |
| 2200 | 10Kb | 0.6708 (6.708) | 100 | 13000 |

Example 4

It is stated that the elements belonging to the groups IVb through VIIb and VIII of the periodic table catalyze a graphitization reaction. Such an effect is observed also in the graphitization reaction of POD, whereby the temperature of the graphitization reaction can be lowered. The films including finely divided powders of Fe, Co, P, Sn, Ni and Sb, respectively, in an amount of 5% by weight based on POD, were heated at a temperature of 2000° C. The heat treatment was conducted in the same manner as in Example 1.

Data of lattice constant and degree of graphitization measured for the resulting films are given in Table 5.

Table 5

| Additive | Addition amount (% by weight) | Lattice constant $C_o$ nm (Å) | Degree of graphitization (%) |
|---|---|---|---|
| None | 0 | 0.6828 (6.828) | 30 |
| Fe | 5 | 0.6772 (6.772) | 63 |
| Co | 5 | 0.6769 (6.769) | 65 |
| P | 5 | 0.6781 (6.781) | 58 |
| Sn | 5 | 0.6780 (6.780) | 58 |
| Ni | 5 | 0.6765 (6.765) | 67 |
| Sb | 5 | 0.6770 (6.770) | 64 |

In each case, the degree of graphitization was extremely improved, compared with in the case (30%) in which no additive was incorporated.

This shows that the above finely divided powders of Fe, Co and the like effectively acted as catalyst. It was found that the graphitization was effectively performed when the above element was added in an amount of at least 2% by weight. It was further observed that the additive was aggregated and separated, and that the further increase of the effect was not shown , when the additive was added in an amount of more than 20% by weight.

Example 5

While all of the heat-treating times in Examples 1 to 4 were one hour, the results obtained by varying the heat-treating time are shown in Table 6. The conditions, except for the heat-treating time, were the same as in Example 1.

Table 6

| Temperature (°C) | Time (min.) | Lattice constant $C_o$ nm (Å) | Degree of graphitization (%) |
|---|---|---|---|
| 1400 | 10 | 0.690 (6.90) | 0 |
| 1400 | 60 | 0.689 (6.89) | 0 |
| 1400 | 360 | 0.688 (6.88) | 0 |
| 1600 | 10 | 0.688 (6.88) | 0 |
| 1600 | 60 | 0.687 (6.87) | 6 |
| 1600 | 360 | 0.6848 (6.848) | 17 |
| 1800 | 10 | 0.687 (6.87) | 6 |
| 1800 | 60 | 0.686 (6.86) | 11 |
| 1800 | 360 | 0.6830 (6.830) | 29 |
| 2000 | 10 | 0.686 (6.86) | 11 |
| 2000 | 60 | 0.6828 (6.828) | 30 |
| 2000 | 360 | 0.6762 (6.762) | 67 |

From the results shown in Table 6, it is seen that the longer the heat-treating time the higher the degree of graphitization.

As described above, it is obvious from the results of Examples 3 through 5 that the heat-treating temperature required for the graphitization of POD varies with pressure, the presence of catalyst, treating time and the like. At a temperature of not higher than 1400°C, however, a number of nitrogen atoms remain in heat-treated POD. These nitrogen atoms can not be removed even by the action of pressure or the catalyst. On the contrary, nitrogen atoms are removed at a temperature of at least 1600°C. Therefore, the graphitization can substantially be enhanced by the action of pressure or the catalyst. Accordingly, it can be concluded that the temperature required for the graphitization of POD is at least 1600°C.

The upper limit of the heat-treating temperature is not restricted to a particular temperature. The condition which is economically optimum in the relationship between the treating temperature and the treating time may be selected. However, a temperature of not more than 3600°C is usually employed, considering the heat resistance of a furnace or the consumption of a heater.

As the inert gas used in the heat treatment helium and nitrogen other than argon can be employed. The heat treatment can also be carried out in vacuo. However, when the heat-treating temperature is at least 2000 °C, it is desirable to use argon or helium.

Example 6

15μm-thick PBBT films, each of which was sandwiched by graphite substrates, were heat treated in a stream of argon at desired temperatures ($T_p$) for one hour, after the temperatures were increased at a rate of 10 °C/min. The temperatures were then lowered at a rate of 20 °C/min. A carbon heater furnace (Shinsei Electric Furnace Model 46-1) was employed for the heat treatment. The black films obtained at temperatures ($T_p$) of not higher than 1600 °C were brittle and had reduced flexibility. At temperatures ($T_p$) of at least 2200 °C, however, the films having flexibility were obtained.

In Table 7 the data of electric conductivity, lattice constant, crystalline size and degree of graphitization measured for PBBT films treated at various temperatures are summarized.

Table 7

| $T_p$ (°C) | Lattice constant $C_o$ nm (Å) | Crystallite size $L_c$ nm (Å) | Degree of graphitization (%) | Electric conductivity (S/cm) |
|---|---|---|---|---|
| 1000 | 0.693 (6.93) | 1.2 (12) | 0 | - |
| 1200 | 0.692 (6.92) | 1.8 (18) | 0 | - |
| 1400 | 0.690 (6.90) | 2.0 (20) | 0 | 450 |
| 1600 | 0.689 (6.89) | 2.4 (24) | 0 | 600 |
| 1800 | 0.687 (6.87) | 6.0 (60) | 5 | 800 |
| 2000 | 0.684 (6.84) | 19.0 (190) | 23 | 1100 |
| 2200 | 0.678 (6.78) | 50.0 (500) | 58 | 1500 |
| 2500 | 0.6737 (6.737) | >100 (>1000) | 83 | 2800 |
| 2800 | 0.6715 (6.715) | >100 (>1000) | 96 | 6900 |
| 3000 | 0.6708 (6.708) | >100 (>1000) | 100 | 10000 |

Under these heat-treating conditions, graphitization is initiated at a temperature of at least 2000 °C, and

rapidly proceeds at a temperature of 2000° to 2500° C. At 2500° C, degree of graphitization already goes up to 83%, and almost perfect graphite is obtained at a temperature of 2800° to 3000° C. The values of lattice constant, crystallite size and the like of this almost perfect graphite are quite similar to those of natural monocrystal graphite. Although it has hitherto been attempted to graphitize various polymeric materials, as described above, PBBT is one of the materials whose graphitization reaction proceeds most easily.

Example 7

Ten polymers, namely, PBT-1, PBT-2, PBT-3, PBBT, PBO, PBBO, PT, a polyimide (Kapton®), a polyamide (Kevlar®) and a polyamideimide, were heat treated at temperatures of 2500° C and 3000° C, in the same manner as in Example 1. The results obtained are collectively shown in Table 8. All of PBT-1, PBT-2, PBT-3, PBBT, PBO and PBBO gave a degree of graphitization of more than 80% by the heat treatment at 2500° C, and almost perfectly converted into graphite by the heat treatment at 3000° C. Such a degree of graphitization is much higher, compared with that of heat-resistant polymers such as a polyimide, a polyamide, a polyamideimide and the like. it is thus understandable that PBT, PBBT, PBO and PBBO have the excellent graphitizing property.

Table 8

| Polymer | Treating temperature (°C) | Lattice constant $C_o$ (Å) nm | Degree of graphitization (%) | Electric conductivity (S/cm) |
|---|---|---|---|---|
| PBT-1 | 2500<br>3000 | 0.6739 (6.739)<br>0.6709 (6.709) | 82<br>99 | 2700<br>9700 |
| PBBT | 2500<br>3000 | 0.6737 (6.737)<br>0.6708 (6.708) | 83<br>100 | 2800<br>10000 |
| PBO | 2500<br>3000 | 0.6740 (6.740)<br>0.6709 (6.709) | 81<br>99 | 2500<br>9000 |
| PBBO | 2500<br>3000 | 0.6738 (6.738)<br>0.6709 (6.709) | 83<br>99 | 2900<br>9800 |
| PBT-2 | 2500<br>3000 | 0.6740 (6.740)<br>0.6711 (6.711) | 81<br>98 | 2300<br>8000 |
| PBT-3 | 2500<br>3000 | 0.6738 (6.738)<br>0.6712 (6.712) | 83<br>98 | 2200<br>8900 |
| PT | 2500<br>3000 | 0.6745 (6.745)<br>0.6715 (6.715) | 78<br>96 | 1700<br>7800 |
| Polyimide * | 2500<br>3000 | 0.6797 (6.797)<br>0.6735 (6.735) | 48<br>84 | 520<br>3000 |
| Polyamide * | 2500<br>3000 | 0.6838 (6.838)<br>0.6730 (6.730) | 24<br>87 | 1000<br>2500 |
| Polyamide-imide * | 2500<br>3000 | 0.6854 (6.854)<br>0.6777 (6.777) | 15<br>60 | 150<br>600 |

* Comparative example

Example 8

In the heat treatment for graphitizing each polymer of PBT-1, PBBT, PBO and PBBO, the actions and effects affected by pressure were examined. The results obtained by the heat treatment under an elevated pressure of 5Kb are shown in Table 9. All of the heat-treating conditions, with the exception of pressure, were the same as in Example. It is obvious from these results that increased pressure enhances the

graphitization and results in acting so as to lower the graphitizing temperature. For example, rapid graphitization is initiated at a temperature of at least 2000° C under atmospheric pressure. However, under increased pressure of 5Kb, it is initiated at a temperature of at least 1800° C. This means that the graphitization of these polymers can easily be enhanced by the heat treatment under elevated pressure.

Similar results can also be obtained in the other inert gases or in vacuo.

Table 9

| Polymer | Temperature °C | Pressure (Kb) | Lattice constant $C_o$ (Å) nm | Degree of graphitization (%) |
|---|---|---|---|---|
| PBBT | 1600 | Atmospheric pressure (Ap) | 0.689 (6.89) | 0 |
| | 1800 | Ap | 0.687 (6.87) | 5 |
| | 2000 | Ap | 0.684 (6.84) | 23 |
| | 2200 | Ap | 0.678 (6.78) | 58 |
| | 2500 | Ap | 0.6737 (6.737) | 83 |
| PBBT | 1600 | 5 | 0.688 (6.88) | 0 |
| | 1800 | 5 | 0.685 (6.85) | 17 |
| | 2000 | 5 | 0.677 (6.77) | 64 |
| | 2200 | 5 | 0.6731 (6.731) | 87 |
| | 2500 | 5 | 0.6710 (6.710) | 99 |
| PBT-1 | 1800 | 5 | 0.684 (6.84) | 23 |
| | 2000 | 5 | 0.675 (6.75) | 76 |
| | 2500 | 5 | 0.6712 (6.712) | 98 |
| PBO | 1800 | 5 | 0.687 (6.87) | 5 |
| | 2000 | 5 | 0.678 (6.78) | 58 |
| | 2500 | 5 | 0.6713 (6.713) | 97 |
| PBBO | 1800 | 5 | 0.685 (6.85) | 17 |
| | 2000 | 5 | 0.674 (6.74) | 81 |
| | 2500 | 5 | 0.6712 (6.712) | 98 |

## Claims

1. A process for producing graphite, which comprises heat treating a film-shaped polymer selected from the group consisting of a poly-1,4-phenyleneoxadiazole, polybenzothiazoles, a polybenzobisthiazole, a polybenzoxazole, a polybenzobisoxazole and polythiazole in an inert gas atmosphere or in vacuo, at a temperature of at least 2000° C, and thereby converting the polymer to graphite.

2. A process for producing graphite as claimed in claim 1, wherein the polymer is heat treated under increased pressure up to 10kb.

3. A process for producing graphite as claimed in claim 1, wherein the polymer is heat treated in the presence of an element belonging to one of the groups IVb through VIIb and VIII of the periodic table.

**Revendications**

1. Procédé de production de graphite, qui comprend le traitement thermique d'un polymère mis sous forme de film, choisi dans le groupe constitué par un poly(1,4-phénylèneoxadiazole), des polybenzothiazoles, un polybenzobisthiazole, un polybenzoxazole, un polybenzobisoxazole et un polythiazole, sous atmosphère de gaz inerte ou sous vide, à une température d'au moins 2000° C, et la conversion, par ce moyen, du polymère en graphite.

2. Procédé de production de graphite tel que revendiqué dans la revendication 1, dans lequel le polymère subit un traitement thermique sous pression élevée, valant jusqu'à 10 kb.

3. Procédé de production du graphite tel que revendiqué dans la revendication 1, dans lequel le polymère subit un traitement thermique en présence d'un élément appartenant à l'un des groupes IVb à VIIb et VIII de la classification périodique.

**Patentansprüche**

1. Verfahren zur Herstellung von Graphit, das die Wärmebehandlung eines Polymers in Form eines Films umfaßt, wobei die Polymere ausgewählt werden aus der Gruppe bestehend aus einem Poly-1,4-phenylenoxadiazol, Polybenzothiazolen, einem Polybenzobisthiazol, einem Polybenzoxazol, einem Polybenzobisoxazol sowie Polythiazol und in einer Inertgasatmosphäre oder im Vakuum auf eine Temperatur von wenigstens 2000° C erhitzt werden, wodurch das Polymer zu Graphit umgewandelt wird.

2. Verfahren zur Herstellung von Graphit nach Anspruch 1, wobei das Polymer unter erhöhtem Druck bis zu 10 kbar wärmebehandelt wird.

3. Verfahren zur Herstellung von Graphit nach Anspruch 1, wobei das Polymer wärmebehandelt wird in Gegenwart eines Elements aus den Gruppen IVb bis VIIb und VIII des Periodensystems.